# EUROPEAN PATENT APPLICATION

(11) **EP 4 492 021 A1**
(43) Date of publication of application: **15.01.2025**
(21) Application number: 23184364.0
(22) Date of filing: 10.07.2023
(51) Int. Cl.: G01J 5/00, H02B 13/065, G01J 5/80

(54) **SYSTEM FOR MONITORING A LOW OR MEDIUM OR HIGH VOLTAGE SWITCHGEAR**

(71) Applicant: ABB SCHWEIZ AG, 5400 Baden (CH)
(72) Inventor: KAUFMANN, Patrik Reto, 5400 Baden (CH); OSTROWSKI, Joerg, 8048 Zürich (CH); WILDERMUTH, Stephan, 69514 Laudenbach (DE); GITZEL, Ralf, 68165 Mannheim (DE); GEBHARDT, Joerg, 55130 Mainz (DE)
(74) Representative: Maiwald GmbH

(57) **Abstract**

The present invention relates to a low or medium or high voltage switchgear (10), comprising:
- at least one compartment (20, 30);
- an infrared camera (40); and
- a processing unit (50);

wherein the at least one compartment comprises a first compartment (20);
wherein the infrared camera is located in the first compartment;
wherein the infrared camera is configured to acquire image data of at least part of a first object (60, 70) within the switchgear, and wherein the infrared camera is configured to determine temperature data for the at least part of the first object;
wherein the infrared camera is configured to provide the temperature data for the at least part of the first object to the processing unit; and
wherein the processing unit is configured to determine that there is an overheating problem for a second object (80) within the switchgear, and wherein the determination that there is an overheating problem for the second object comprises utilization of the temperature data for the at least part of the first object.

## Description

### FIELD OF THE INVENTION

The present invention relates to a low or medium or high voltage switchgear, a system for monitoring a low or medium or high voltage switchgear, a method for monitoring a low or medium or high voltage switchgear, a computer program element and a computer readable medium.

### BACKGROUND OF THE INVENTION

The infrared (IR)-monitoring of switchgear is limited to the direct measurements of objects radiating significantly in the infrared range (e.g. solid surfaces like copper bus bars, that can have surface treatment to ensure a high emissivity, epoxy surfaces, etc.) within the field of vision of the infrared camera.

Typically, only 10-30% of the IR-image is used for temperature detection. This can be masked as a region called the "region of interest" (ROI). Hotspots hidden below covers, for dielectric insulation, cannot be observed. Switchgear compartments or panels are densely packed with busbars and other pieces of equipment, that constitute "visual" obstacles with respect to infrared imaging and thus there are (shadow) regions within the switchgear that cannot be monitored.

There is a need to address these issues.

### SUMMARY OF THE INVENTION

Therefore, it would be advantageous to have an improved system for monitoring a low or medium or high voltage switchgear.

The object of the present invention is solved with the subject matter of the independent claims, wherein further embodiments are incorporated in the dependent claims.

In a first aspect, there is provided a low or medium or high voltage switchgear, comprising:
- at least one compartment;
- an infrared camera; and
- a processing unit.

The at least one compartment comprises a first compartment. The infrared camera is located in the first compartment. The infrared camera is configured to acquire image data of at least part of a first object within the switchgear, and the infrared camera is configured to determine temperature data for the at least part of the first object. The infrared camera is configured to provide the temperature data for the at least part of the first object to the processing unit. The processing unit is configured to determine that there is an overheating problem for a second object within the switchgear. The determination that there is an overheating problem for the second object comprises utilization of the temperature data for the at least part of the first object.

In an example, the infrared camera is configured to acquire image data of at least part of the second object, and the infrared camera is configured to determine temperature data for the at least part of the second object. The determination that there is an overheating problem for the second object comprises utilization of the temperature data for the at least part of the second object.

In an example, the first object comprises a part of a wall of a compartment of the at least one compartment.

In an example, the first object comprises a finned structure attached to the wall of the compartment of the at least one compartment.

In an example, the first object comprises a heat conducting structure with a first part and a second part, and the acquired image data of the first object is image data of the first part and is not image data of the second part.

In an example, the first object is a heat pipe or thermosyphon or copper conductor.

In an example, the second part of the first object is in thermal contact with the second object.

In an example, the switchgear comprises a second compartment. An IR window is in a wall separating the first compartment from the second compartment and the first object is located in the second compartment.

In an example, the second object is located in the second compartment.

In an example, the first object is located in the first compartment.

In an example, the second object is located in the first compartment.

In an example, imprint information is provided in the switchgear. The infrared camera is configured to acquire image data of the imprint information and provide the image data to the processing unit. The processing unit is configured to utilize the image data of the imprint information for one or more of: alignment of the infrared camera, calibration of the infrared camera, identification of the switchgear and/or compartment

In a second aspect, there is provided a system for monitoring a low or medium or high voltage switchgear, the comprising:
- an infrared camera; and
- a processing unit.

The infrared camera is configured to be located in a first compartment of at least one compartment of the switchgear. The infrared camera is configured to acquire image data of at least part of a first object within the switchgear, and the infrared camera is configured to determine temperature data for the at least part of the first object. The infrared camera is configured to provide the temperature data for the at least part of the first object to the processing unit. The processing unit is configured to determine that there is an overheating problem for a second object within switchgear. The determination that there is an overheating problem for the second object comprises utilization of the temperature data for the at least part of the first object.

In a third aspect, there is provided a method for monitoring a low or medium or high voltage switchgear, the comprising:
- locating an infrared camera in a first compartment of at least one compartment of the switchgear;
- acquiring by the infrared camera image data of at least part of a first object within the switchgear;
- determining by the infrared camera temperature data for the at least part of the first object;
- providing by the infrared camera the temperature data for the at least part of the first object to a processing unit; and
- determining by the processing unit that there is an overheating problem for a second object within switchgear, and wherein the determining that there is an overheating problem for the second object comprises utilizing the temperature data for the at least part of the first object.

According to another aspect, there is provided a computer program element controlling the system as previously described which, if the computer program element is executed by a processor, is adapted to perform the method as previously described.

According to another aspect, there is provided a computer readable medium having stored a computer element as previously described.

The computer program element can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawing:
Fig. 1 shows a schematic representation of an example of a low or medium or high voltage switchgear with monitoring system;
Fig. 2 shows a method of monitoring a low or medium or high voltage switchgear;
Fig. 3 shows a schematic representation of an example of a low or medium or high voltage switchgear with monitoring system;
Fig. 4 shows a schematic representation of an example of a low or medium or high voltage switchgear with monitoring system; and
Fig. 5 shows a schematic representation of an example of a monitoring system for a low or medium or high voltage switchgear.

### DETAILED DESCRIPTION OF EMBODIMENTS

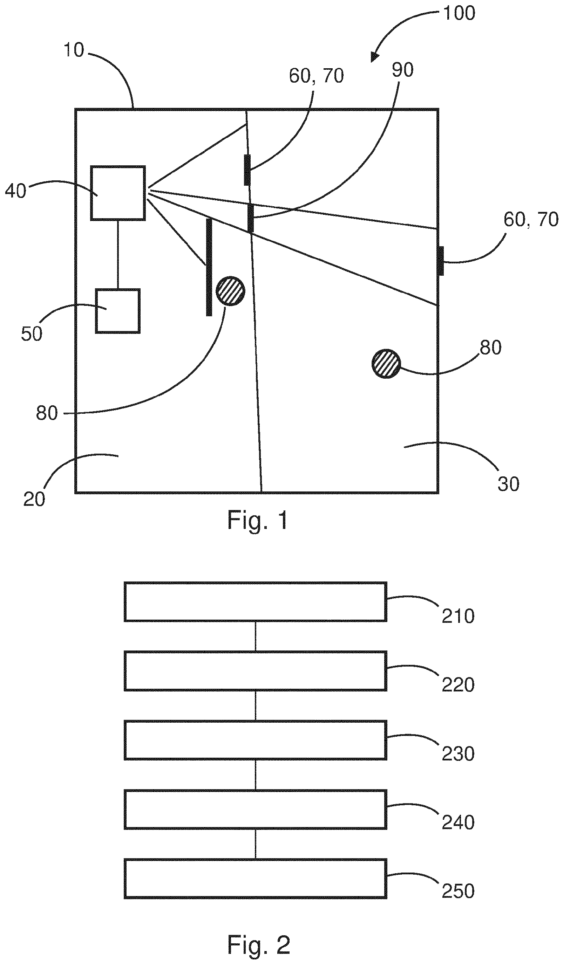

Figs. 1-5 relate to a low or medium or high voltage switchgear, a system for monitoring a low or medium or high voltage switchgear, and a method for monitoring a low or medium or high voltage switchgear.

An example of a low or medium or high voltage switchgear 10 comprises:
- at least one compartment 20, 30;
- an infrared camera 40; and
- a processing unit 50.

The at least one compartment comprises a first compartment 20. The infrared camera is located in the first compartment. The infrared camera is configured to acquire image data of at least part of a first object 60, 70 within the switchgear, and the infrared camera is configured to determine temperature data for the at least part of the first object. The infrared camera is configured to provide the temperature data for the at least part of the first object to the processing unit. The processing unit is configured to determine that there is an overheating problem for a second object 80 within the switchgear. The determination that there is an overheating problem for the second object comprises utilization of the temperature data for the at least part of the first object.

Thus, normally objects are directly imaged to determine if there is an overheating problem with a part of the switchgear, such as a current carrying item (e.g., a busbar developing a hotspot) due to for example Joule heating as a crack has developed increasing resistance or a joint has developed a defect and now has an increased resistance. However, now the infrared camera is acquiring indirect temperature data within the switchgear that can be used to determine if an object that may not be able to be directly imaged (e.g. the busbar) is overheating.

Thus, for example an air temperature within the switchgear can be determined by imaging actual solid objects that can be in thermal equilibrium with the air or have a calibrated temperature relationship with the air, and this can be used to determine the air temperature. Then, if the air temperature is above that expected for the present operation of the switchgear this can be used to indicate that there is an overheating problem developing or that has developed and a signal can be sent from the processing unit such that remedial action can be automatically made, such as switch off, or a signal sent to an operative who can investigate further and decide to interrupt operation.

According to an example, the infrared camera is configured to acquire image data of at least part of the second object, and the infrared camera is configured to determine temperature data for the at least part of the second object. The determination that there is an overheating problem for the second object comprises utilization of the temperature data for the at least part of the second object.

Thus, the infrared camera need not acquire direct data for the object that is being determined to be overheating, and indeed it may be impossible to directly image such an object as it could be covered or obscured. However, when it can be imaged the image data of other objects, that can be used to determine a background air temperature, can complement the temperature data of the object itself that could be overheating (e.g. busbar) to provide increased confidence if there is actual overheating or not.

According to an example, the first object comprises a part of a wall of a compartment of the at least one compartment.

Thus, by imaging the wall the air temperature in the compartment can be determined from which it can be determined that a current carrying part is hotter than it should be that has led to an increased air temperature above what it should be, and an overheating alarm can be signalled.

According to an example, the first object comprises a finned structure 60 attached to the wall of the compartment of the at least one compartment.

By using a finned structure, the structure has an increased surface area and is better in thermal equilibrium with the air than if it did not have fins.

In an example, the finned structure comprises a plate and a plurality of fins attached to the plate, and wherein the plate is attached to the wall of the compartment.

In an example, the plurality of fins extended perpendicularly to the plate.

In an example, the plurality of fins are parallel to one another.

In another example, the plurality of fins are aligned vertically.

In an example, the finned structure the plate is a thermally insulating layer.

In an example, the finned structure can be on the same side of the wall as the IR camera, such that the IR camera is directly imaging the finned structure.

In an example, the finned structure can be on the opposite side of the wall to the IR camera but attached to a region of wall being imaged by the IR camera. Thus, the IR camera images a part of a wall, and on the far side in a second compartment a finned structure is attached the wall. The finned structure becomes in thermal equilibrium with the air in the second compartment and therefore if the air temperature in the second compartment if different to the air in the first compartment, for example warmer, the wall area where the finned structure is attached will be slightly warmer than it would be. Thus, in imaging the wall, the IR camera sees a slightly higher temperature at the location where the finned structure is on the opposite side of the wall, and can infer the air temperature in the second compartment. A processing unit can then determine if there is an overheating problem in the second compartment.

According to an example, the first object comprises a heat conducting structure 70 with a first part and a second part, and the acquired image data of the first object is image data of the first part and is not image data of the second part.

Thus, a component with a very high thermal conductivity can have one end attached to a current carrying part, such as a busbar that may not be able to be directly imaged because it is under and insulating cover or shadowed by another part of the switchgear. The component then extends away from the busbar to an extent that the other end can now be imaged by the IR camera, and this other end could for example have high emissivity paint applied to it, Then, by imaging this end of the component the temperature of the busbar can be indirectly determined, where use can be made of calibration data.

According to an example, the first object is a heat pipe or thermosyphon or copper conductor.

According to an example, the second part of the first object is in thermal contact with the second object.

Thus, the inventors established that thermosyphons (or heat pipes) that are normally used to cool items, where a liquid is vaporized at a hot end and travels to a cooler end where it condenses and then flows back to the hot end and is evaporated again, in addition to having a cooling effect has an extremely high thermal conductivity and the temperature of the cool end can be calibrated with respect to the temperature of the hot end, such that temperature data of the cool end, determined from an IR image, can be used to provide a temperature of the hot end and of the items to which it is attached - e.g. busbar - to establish if the busbar is overheating.

According to an example, the switchgear comprises a second compartment 30, and an IR window 90 is in a wall separating the first compartment from the second compartment and the first object is located in the second compartment.

According to an example, the second object is located in the second compartment.

According to an example, the first object is located in the first compartment.

According to an example, the second object is located in the first compartment.

Thus, a single IR camera can be used to monitor, via indirect imagery, the temperature of for example current carrying parts, by determining for example the air temperature, in a compartment where the IR camera is located or indeed in other compartments.

According to an example, imprint information 95 is provided in the switchgear. The infrared camera is configured to acquire image data of the imprint information and provide the image data to the processing unit. The processing unit is configured to utilize the image data of the imprint information for one or more of: alignment of the infrared camera, calibration of the infrared camera, identification of the switchgear and/or compartment.

The imprint information can for example be a barcode or QR code that provides details on the switchgear/compartment and items being monitored. The imprint information can be markers that should appear at set points in the IR imagery, and it can then be determined if an earthquake or maintenance for example has shifted the IR camera and/or parts within the switchgear, enabling remedial action to be taken.

From the description above, a switchgear could be built with the infrared camera and processing unit, and for example also having an IR window between compartments and/or imprint information.

However, a system 100 can be provided that can be retrofitted to an existing switch gear.

An example of such a system 100 for monitoring a low or medium or high voltage switchgear 10 comprises:
- an infrared camera 40; and
- a processing unit 50.

The at least one compartment comprises a first compartment 20. The infrared camera is located in the first compartment. The infrared camera is configured to acquire image data of at least part of a first object 60, 70 within the switchgear, and the infrared camera is configured to determine temperature data for the at least part of the first object. The infrared camera is configured to provide the temperature data for the at least part of the first object to the processing unit. The processing unit is configured to determine that there is an overheating problem for a second object 80 within the switchgear. The determination that there is an overheating problem for the second object comprises utilization of the temperature data for the at least part of the first object.

According to an example, the infrared camera is configured to acquire image data of at least part of the second object, and the infrared camera is configured to determine temperature data for the at least part of the second object. The determination that there is an overheating problem for the second object comprises utilization of the temperature data for the at least part of the second object.

According to an example, the first object comprises a part of a wall of a compartment of the at least one compartment.

According to an example, the first object comprises a finned structure 60 attached to the wall of the compartment of the at least one compartment.

By using a finned structure, the structure has an increased surface area and is better in thermal equilibrium with the air than if it did not have fins.

In an example, the finned structure comprises a plate and a plurality of fins attached to the plate, and wherein the plate is attached to the wall of the compartment.

In an example, the plurality of fins extended perpendicularly to the plate.

In an example, the plurality of fins are parallel to one another.

In another example, the plurality of fins are aligned vertically.

In an example, the finned structure the plate is a thermally insulating layer.

In an example, the finned structure can be on the same side of the wall as the IR camera, such that the IR camera is directly imaging the finned structure.

In an example, the finned structure can be on the opposite side of the wall to the IR camera but attached to a region of wall being imaged by the IR camera. Thus, the IR camera images a part of a wall, and on the far side in a second compartment a finned structure is attached the wall. The finned structure becomes in thermal equilibrium with the air in the second compartment and therefore if the air temperature in the second compartment if different to the air in the first compartment, for example warmer, the wall area where the finned structure is attached will be slightly warmer than it would be. Thus, in imaging the wall, the IR camera sees a slightly higher temperature at the location where the finned structure is on the opposite side of the wall, and can infer the air temperature in the second compartment. A processing unit can then determine if there is an overheating problem in the second compartment.

According to an example, the first object comprises a heat conducting structure 70 with a first part and a second part, and the acquired image data of the first object is image data of the first part and is not image data of the second part.

According to an example, the first object is a heat pipe or thermosyphon or copper conductor.

According to an example, the second part of the first object is in thermal contact with the second object.

According to an example, the switchgear comprises a second compartment 30, and an IR window 90 is in a wall separating the first compartment from the second compartment and the first object is located in the second compartment.

According to an example, the second object is located in the second compartment.

According to an example, the first object is located in the first compartment.

According to an example, the second object is located in the first compartment.

According to an example, imprint information 95 is provided in the switchgear. The infrared camera is configured to acquire image data of the imprint information and provide the image data to the processing unit. The processing unit is configured to utilize the image data of the imprint information for one or more of: alignment of the infrared camera, calibration of the infrared camera, identification of the switchgear and/or compartment.

A associated method 200 for monitoring a low or medium or high voltage switchgear 10 comprises:
- locating 210 an infrared camera in a first compartment of at least one compartment of the switchgear;
- acquiring 220 by the infrared camera image data of at least part of a first object within the switchgear;
- determining 230 by the infrared camera temperature data for the at least part of the first object;
- providing 240 by the infrared camera the temperature data for the at least part of the first object to a processing unit; and
- determining 250 by the processing unit that there is an overheating problem for a second object within switchgear, and wherein the determining that there is an overheating problem for the second object comprises utilizing the temperature data for the at least part of the first object.

In an example, the method comprises acquiring by the infrared camera image data of at least part of the second object, and determining by the infrared camera temperature data for the at least part of the second object, and wherein the determining that there is an overheating problem for the second object comprises utilizing the temperature data for the at least part of the second object.

In an example, the first object comprises a part of a wall of a compartment of the at least one compartment.

In an example, the first object comprises a finned structure attached to the wall of the compartment of the at least one compartment.

In an example, the finned structure comprises a plate and a plurality of fins attached to the plate, and wherein the plate is attached to the wall of the compartment.

In an example, the plurality of fins extended perpendicularly to the plate.

In an example, the plurality of fins are parallel to one another.

In another example, the plurality of fins are aligned vertically.

In an example, the finned structure the plate is a thermally insulating layer.

In an example, the first object comprises a heat conducting structure with a first part and a second part, wherein the acquired image data of the first object is image data of the first part and is not image data of the second part.

In an example, the first object is a heat pipe or thermosyphon or copper conductor.

In an example, the second part of the first object is in thermal contact with the second object.

In an example, the switchgear comprises a second compartment, wherein an IR window is in a wall separating the first compartment from the second compartment and wherein the first object is located in the second compartment.

In an example, the second object is located in the second compartment.

In an example, the first object is located in the first compartment.

In an example, the second object is located in the first compartment.

In an example, imprint information is provided in the switchgear, wherein the method comprises acquiring by the infrared camera image data of the imprint information and providing the image data to the processing unit, and utilizing by the processing unit the image data of the imprint information for one or more of: alignment of the infrared camera, calibration of the infrared camera, identification of the switchgear and/or compartment

Thus, up until now, the IR-sensing is used for temperature monitoring of surfaces in the field of vision only (direct IR radiation). However, the new development relates to how to complementary extend this direct, visual, temperature measurement through indirect measurements that can for example be used to determine air temperatures.

Several simple physical extensions have been developed in order to gain more (indirect) temperature information from the system such as for example air temperature or of spots hidden below silicon-insulation. The different extensions add value when an additional measurement probe can be avoided by combining two sensing regions to one IR-camera sensing area, or when the IR-camera gains more information than only the direct temperature.

The IR-monitoring is up to now limited to the field of vision, in other words, to the direct measurements of objects radiating significantly in the infrared range (e.g. solid surfaces like copper bus bars with surface treatment to ensure a high emissivity, epoxy surfaces, etc.) within the field of vision. • Typically, 10-30% of the IR-image is used for temperature detection, i.e. it's masked as region called "region of interest" (ROI) • hotspots hidden below covers for dielectric insulation cannot be observed • panels are densely packed with busbars etc., thus with many visual obstacles (shadow) • air is invisible for the IR-monitoring which requires solid radiating bodies • panels are divided by solid walls into compartments (thermal background)

Thus, at present only about 30% of an image is used, as a masked region, for direct temperature measurements for a region of interest (ROI). The new development enables increased amount of the IR image, for example up to 70%-90% of the IR-image, to be utilized and make it in effect another region of interest to provide indirect data, complementing the directly monitored temperatures.

The new development can utilizes a finned structure to access the panel/compartment/switchgear air temperature. A low cost low-cost heatpipe or thermosyphon (Link) can be used as heat-spreader to access spots hidden e.g. below silicone insulation. Infrared windows can be used to access temperatures in adjacent compartment (same panel). Also, imprint information in this area (markers, text, barcode, ...) can be used to be identified by camera for (automatic) alignment of camera, calibration, identification of type of switchgear/compartment,.

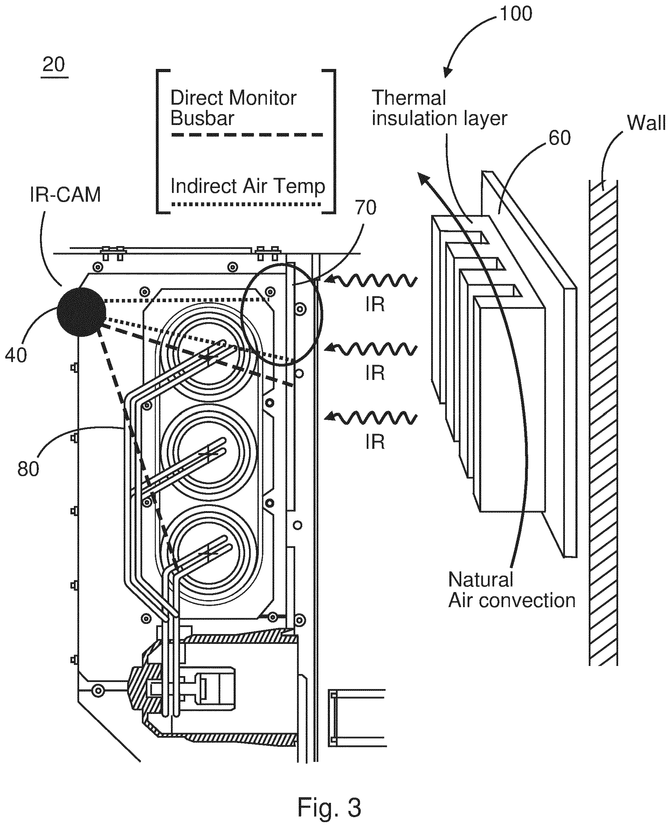

Fig. 3 shows a detailed embodiment, that is used for example to determine the air temperature in the compartment from IR imagery enabling it to be determined if overheating is occurring.

The thermally insulating layer is to avoid that the heat from the air is dissipated from the fins into the wall plate. Thus, the finned structure 60 is not cooled by the wall.

The finned structure 60 (e.g. made from oxidized aluminum or copper) is at about the same temperature as the surroundings, due to heated air that is natural circulating by convection. Therefore, it allows to indirectly get an indication of the air temperature in the compartment.

A "heat-spreader" such as a heat link, or conductor or heat pipe or thermosyphon 70 can be used to provide indirect temperature information, access, spots that are hidden e.g. below silicone insulation.

The heatpipe 70 comes from a technology that is matured, long-life and cheap. They feature a very low thermal resistance, e.g. much lower than solid conduction. Therefore, if they are used as heatspreader, their "cold end" is nearby at the hotspot temperature ("hot end" of the pipe). The "cold end" is equipped with a metallic plate to improve the visibility (size) from the IR-camera and it's representing the temperature close to the hotspot. The heatpipes are made from aluminum or copper tube, and are sealed for life-time and can be bended such that they fit the application. However, they are conductive, and one needs to take care about the dielectrics. But, this technology previously used as a cooling technology has surprising advantages with respect to determining temperatures, indirectly, for parts of a switchgear that cannot be directly imaged.

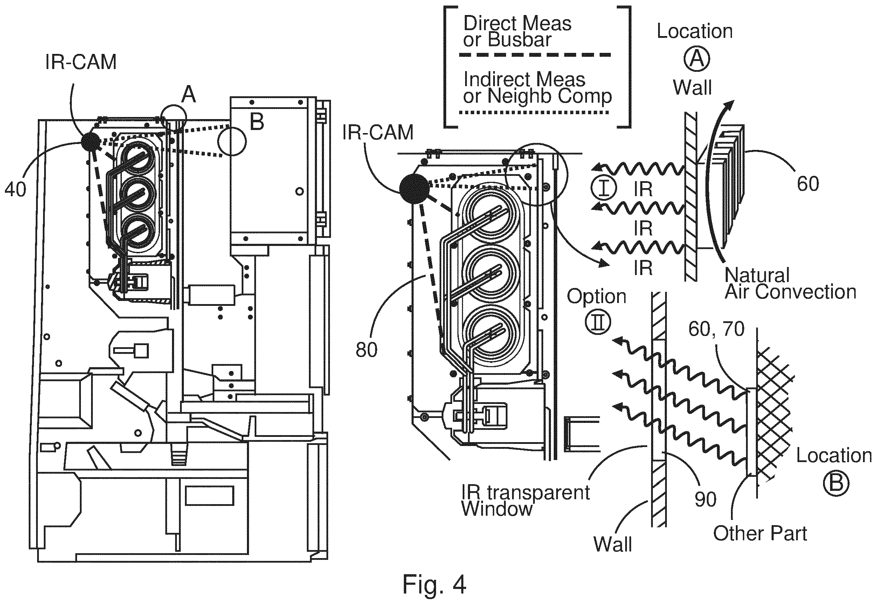

Also, temperature data in an adjacent compartment to where the infrared camera is located can be carried out, as shown in Fig. 4.

The temperature(s) in the adjacent compartment can be accessed in two ways:
Option 1 / indirect measurement: Access the air temperature in the adjacent compartment with a finned structure (Location A) by using the same principle as described above.
Option 2 / direct measurement: When introducing an IR-transparent window in the wall, one can also monitor the temperature in the adjacent compartment (Location B).

Thus, when a switchgear is built a compartment wall can be made with an IR window. However, an IR window can be inserted into a wall, if a hole is cut, the window installed.

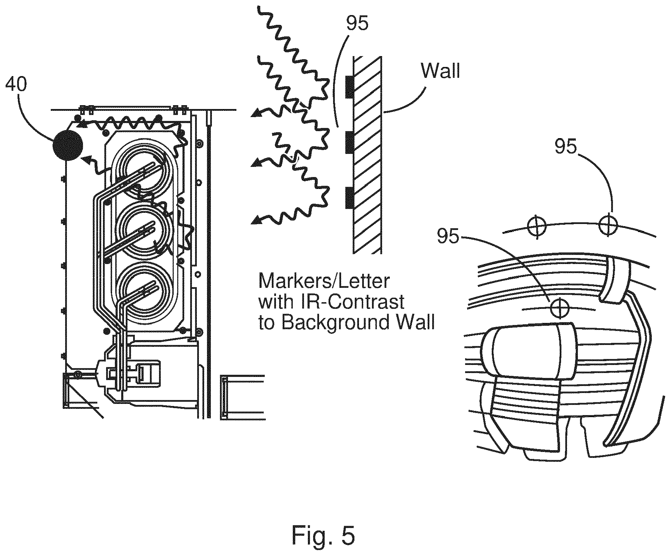

As shown in Fig. 5 imprint information can be used. The imprint information in this area (markers, text, barcode, ...) is identified by camera for (automatic) alignment of camera, calibration, identification of type of switchgear/compartment.

Given a sufficiently high resolution of the IR-camera (or any other measuring system on the board, like e.g. normal visual camera), one can use the background for additional information. The signs/letters/numbers/... can be applied such that they have a high contrast to their background, which is typically the compartment wall. Contrast means that the IR-emissivity is the opposite as the one from the wall, e.g. if the wall is reflecting than the letters should be absorbing/emitting

Text, or barcode or a QR code can be utilized, showing the serial number, type of compartment, location, rating, ... which can be helpful to match the images to the a database.

Markers, for example lines and shapes, allow to automatically align the (IR-)image with the physical system. Firstly, this can enabled assessment and detection for an automated masking and/or distortion of the image. Secondly, it can allow to verify whether the geometrical alignment of the camera and the field of sight changes with time, e.g. after maintenance or an earthquake.

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A low or medium or high voltage switchgear (10), comprising:
- at least one compartment (20, 30);
- an infrared camera (40); and
- a processing unit (50);
wherein the at least one compartment comprises a first compartment (20);
wherein the infrared camera is located in the first compartment;
wherein the infrared camera is configured to acquire image data of at least part of a first object (60, 70) within the switchgear, and wherein the infrared camera is configured to determine temperature data for the at least part of the first object;
wherein the infrared camera is configured to provide the temperature data for the at least part of the first object to the processing unit; and
wherein the processing unit is configured to determine that there is an overheating problem for a second object (80) within the switchgear, and wherein the determination that there is an overheating problem for the second object comprises utilization of the temperature data for the at least part of the first object.

2. Switchgear according to claim 1, wherein the infrared camera is configured to acquire image data of at least part of the second object, wherein the infrared camera is configured to determine temperature data for the at least part of the second object, and wherein the determination that there is an overheating problem for the second object comprises utilization of the temperature data for the at least part of the second object.

3. Switchgear according to any of claims 1-2, wherein the first object comprises a part of a wall of a compartment of the at least one compartment.

4. Switchgear according to any of claims 1-3, wherein the first object comprises a finned structure (60) attached to the wall of the compartment of the at least one compartment.

5. Switchgear according to claim 1, wherein the first object comprises a heat conducting structure (70) with a first part and a second part, wherein the acquired image data of the first object is image data of the first part and is not image data of the second part.

6. Switchgear according to claim 5, wherein the first object is a heat pipe or thermosyphon or copper conductor.

7. Switchgear according to any of claims 5-6, wherein the second part of the first object is in thermal contact with the second object.

8. Switchgear according to any of claims 1-7, wherein the switchgear comprises a second compartment (30), wherein an IR window (90) is in a wall separating the first compartment from the second compartment and wherein the first object is located in the second compartment.

9. Switchgear according to any of claims 1-8, wherein the second object is located in the second compartment.

10. Switchgear according to any of claims 1-7, wherein the first object is located in the first compartment.

11. Switchgear according to any of claims 1-7 and claim 10, wherein the second object is located in the first compartment.

12. Switchgear according to any of claims 1-11, wherein imprint information (95) is provided in the switchgear, wherein the infrared camera is configured to acquire image data of the imprint information and provide the image data to the processing unit, and wherein the processing unit is configured to utilize the image data of the imprint information for one or more of: alignment of the infrared camera, calibration of the infrared camera, identification of the switchgear and/or compartment

13. A system (100) for monitoring a low or medium or high voltage switchgear (10), the comprising:
- an infrared camera (40); and
- a processing unit (50);
wherein the infrared camera is configured to be located in a first compartment of at least one compartment (20, 30) of the switchgear;
wherein the infrared camera is configured to acquire image data of at least part of a first object (60, 70) within the switchgear, and wherein the infrared camera is configured to determine temperature data for the at least part of the first object;
wherein the infrared camera is configured to provide the temperature data for the at least part of the first object to the processing unit; and
wherein the processing unit is configured to determine that there is an overheating problem for a second object (80) within switchgear, and wherein the determination that there is an overheating problem for the second object comprises utilization of the temperature data for the at least part of the first object.

14. A method (200) for monitoring a low or medium or high voltage switchgear (10), the comprising:
- locating (210) an infrared camera in a first compartment of at least one compartment of the switchgear;
- acquiring (220) by the infrared camera image data of at least part of a first object within the switchgear;
- determining (230) by the infrared camera temperature data for the at least part of the first object;
- providing (240) by the infrared camera the temperature data for the at least part of the first object to a processing unit; and
- determining (250) by the processing unit that there is an overheating problem for a second object within switchgear, and wherein the determining that there is an overheating problem for the second object comprises utilizing the temperature data for the at least part of the first object.

15. A computer program element for controlling a switchgear according to any of claims 1-12 or a system according to claim 13 which when executed by a processor is configured to carry out the method of claim 14.
